# EUROPÄISCHE PATENTSCHRIFT

(11) **EP 1 065 138 B1**
(45) Veröffentlichungstag und Bekanntmachung des Hinweises auf die Patenterteilung: **14.02.2007**
(21) Anmeldenummer: 00113360.2
(22) Anmeldetag: 23.06.2000
(51) Int. Cl.: B62D 55/092, B62D 55/21

(54) **Gleiskette für Kettenfahrzeuge**
Track for tracklaying vehicles
Chenille pour véhicules chenillés

(30) Priorität: 29.06.1999 DE 19929961
(43) Veröffentlichungstag der Anmeldung: 03.01.2001
(73) Patentinhaber: Intertractor GmbH, 58285 Gevelsberg (DE)
(72) Erfinder: Ketting, Michael, Dr., 58256 Ennepetal (DE); Woydt, Mathias, Dr., 13465 Berlin (DE); Tomaszewski, Jürgen, 40764 Langenfeld (DE); Pietzsch, Christoph, 08485 Lengenfeld (DE)
(74) Vertreter: Köchling, Conrad-Joachim

(56) Entgegenhaltungen:
- EP-A- 0 069 799
- WO-A-99/05425
- GB-A- 1 415 100
- SU-A- 1 782 846
- US-A- 4 847 135

## Beschreibung

Die Erfindung betrifft eine Gleiskette für Kettenfahrzeuge, insbesondere kettengetriebene Bau- und Sonderfahrzeuge, sowie für fördertechnische Einrichtungen, bestehend aus Kettenbuchsen, Kettenbolzen und Kettengliedern, wobei zur Bildung eines Scharniergelenks die innenliegenden Kettengliederenden auf die Kettenbuchse und die außenliegenden Kettengliederenden auf die die Kettenbuchse axial überragenden Enden der Kettenbolzen aufgepreßt sind.

Derartige Gleisketten sind im Stand der Technik bekannt. An den Gelenken der Gleisketten bilden die Innenseiten der Buchse und die Außenseite des Bolzens ein Tribosystem mit Linienberührung. Zur Verminderung der Reibung, zur Vermeidung von adhäsivem Verschleiß und zur Minimierung des Verschleißbetrages (Kettenlängung, Lebensdauerverlängerung) werden die Gelenke bisher in geschlossenen Systemen mit additivierten Fetten oder Ölen geschmiert. Diese Art der Schmierung bedingt Dichtungssysteme zur Vermeidung von Schmierstoffleckagen und Eintrag von Fremdpartikeln. Hierzu werden Dichtringe z. B. aus Polyurethan eingesetzt, welche die Öl- oder fettgefüllten Elemente nach außen abdichten. Abrasionsschäden an den Dichtringen oder adhäsives Versagen der metallischen Werkstoffe führen hierbei zum Ausfall der Gleiskette. Eine Gleiskette dieser Art ist beispielsweise aus der EP 0 069 799 A bekannt. Solche Gleisketten sind insbesondere wegen der Ausbildung des Fett- oder Ölreservoirs (Hohlbohren des Bolzens), wegen der Nachfüllmöglichkeit dieses Reservoirs und wegen der Anordnung der Dichtungen aufwendig und kostenintensiv. Zudem besteht insbesondere bei dem Betrieb von entsprechend ausgerüsteten Kettenfahrzeugen auf sandigen Böden oder dergleichen das Problem, dass eine erhebliche Gefahr besteht, dass die Dichtungen durch abrasive Sände oder dergleichen beschädigt werden, so dass das Schmiersystem versagen muss und wassergefährdende Schmierstoffe in die Umwelt gelangen.

Aus der GB 1 415 100 A ist ein Gleitlager bekannt, bei dem ein Metallträger mit einer Gleitschicht vorgesehen ist. Die Gleitschicht besteht aus einem Harzgranulat oder Puder, welches in einen gehärteten Polyimidlack eingebettet ist. Dieser Polyimidlack dient als Bindemittel zum Träger. Insbesondere sind dort auch Polyamidimide für das Harzgranulat beziehungsweise das Harzpuder und/oder den Lack angegeben. In die Gleitschicht sind noch Additive integriert, beispielsweise in Form von Graphitpulver, Molybdändisulfid oder Oxid.

Ausgehend von diesem Stand der Technik liegt der Erfindung die Aufgabe zugrunde, eine Gleiskette gattungsgemäßer Art zu schaffen, die kostengünstig gefertigt werden kann und hohe Lebensdauer auch beim Betrieb in abrasiven Medien, wie Sand oder dergleichen aufweist.

Zur Lösung dieser Aufgabe wird vorgeschlagen, dass die Mantelfläche des Kettenbolzens oder die Innenmantelfläche der Kettenbuchse mindestens in dem Bereich, der bei der Scharnierung der Kettengelenke gegenseitig in Berührung kommt, oder beide Mantelflächen mit einem Gleitlack beschichtet ist oder sind, der aus einem Bindemittel oder Träger aus Kunststoff mit Molekülstrukturen mit Amid-Imid-Monomeren besteht, der mit Hydroxid-Verbindungen des Molybdäns oder einer Mischung von Hydroxid-Verbindungen des Molybdäns und Molybdändisulfid und Graphit gemischt ist.

Bevorzugt ist dabei vorgesehen, dass das Bindemittel oder der Träger aus Molekülen mit alternierenden Amid-Imid-Monomeren besteht.

Um die Haftung zwischen dem Gleitlack und den Mantelflächen zu verbessern, wird vorgeschlagen, dass auf die mit Gleitlack zu beschichtenden Mantelflächen ein Primer, insbesondere in Form einer Phosphatierung aufgebracht ist, der mit Gleitlack beschichtet ist.

Alternativ oder zusätzlich kann aus dem gleichen Grunde vorgesehen sein, dass die zu beschichteten Mantelflächen aufgerauht sind und der Gleitlack auf die aufgerauhten Flächen aufgebracht ist.

Bei der Verwendung von gezogenen Rohren für die Buchse beträgt die Rauheit auf der Innenseite Ra ∼ 1,5 - 2 µm, die nicht nachgearbeitet werden muß.

Bevorzugt ist dabei vorgesehen, daß die Rauhtiefe der Aufrauhung etwa Ra - 0,5 µm beträgt.

Besonders bevorzugt ist vorgesehen, daß der Gleitlack Molybdändisulfid in der Größenordnung von 15 bis 30 Volumenprozent enthält.

Desweiteren ist bevorzugt vorgesehen, daß der Gleitlack Graphit in der Größenanordnung von 3 bis 20 Volumenprozent enthält.

Als besonders vorteilhaft hat sich herausgestellt, wenn der Gleitlack 20 bis 25 Volumenprozent Molybdändisulfid und 4 bis 6 Volumenprozent Graphit enthält.

Zudem kann vorgesehen sein, daß der Gleitlack auf den Mantelflächen eingebrannt ist.

Dabei kann vorgesehen sein, daß die Einbrenntemperatur ca. 200 ° C und Einbrenndauer ca. 1 Stunde beträgt.

Zudem ist bevorzugt vorgesehen, daß die Schichtdicke der Gleitlackbeschichtung etwa 10 bis 20 µm beträgt.

Insbesondere ist vorgesehen, daß der Gleitlack in mehreren Schichten, vorzugsweise zwei Schichten, aufgebracht ist, wobei die Schichtdicke der Einzelbeschichtung 7 bis 10 µm beträgt.

Bevorzugt ist ferner vorgesehen, daß der Gleitlack als Hydroxide des Molybdän kristalline Monohydrate und/oder Dihydrate des Molybdänoxids enthält, allgemein nach der Formel MoOO₃ n H₂ O, mit n=1 oder 2 und/oder daß in diesen Verbindungen ein Teil der H₂ O-Moleküle mit dem Molybdän in Schichten aus [MoOO_{4/2}(OH₂)]ₙ oktahedrisch koordiniert sind oder Mo₃O₈xH₂O (Ilsemannite) enthält.

Zudem kann auch bevorzugt sein, daß der Gleitlack unterstöchiometrische Oxyde des Molybdäns enthält, bei denen es sich um sogenannte Magnéli-Phasen der Formel (Mo)ₙO₃ₙ₋₁ handelt, mit n >4, wobei sich der Defekt in der {102}- oder {103}-Ebene des Krystalls jeweils ausbildet.

Gemäß der erfindungsgemäßen Ausbildung können die Kettengelenke der Gleiskette ohne Schmiermittel in Form von Fett oder Öl und demzufolge ohne Schmiermittelreservoir und ohne Einfüllmöglichkeit für Schmiermittel ausgebildet werden. Desweiteren kann auf die Anordnung von Dichtringen oder dergleichen verzichtet werden, wobei es selbstverständlich auch denkbar ist, den Zutritt von abrasiven Medien, wie Sand oder dergleichen durch Anordnung von Dichtungen zu unterbinden. Gemäß der Erfindung werden die Oberflächen im Tribosystem Buchse/Bolzen mit einem entsprechenden Gleitlack beschichtet, der vorzugsweise wenigstens 20 bis 25 Volumenprozent Molybdändisulfid enthält. Dieses schützt das Tribosystem vor adhäsivem Versagen. Es hat sich zudem herausgestellt, daß die gewünschte Funktion nur dann erreicht wird, wenn zusätzlich Graphit in der Größenordnung von 3 bis 20 Volumenprozent, vorzugsweise 4 bis 6 Volumenprozent im Gleitlack enthalten ist. Die Graphitbestandteile können eine Korngröße von 1 bis 15 µm haben. Die Anwendung des erfindungsgemäßen Gleitlackes begünstigt das tribologische Verhalten von Molybdändisulfid, weil insbesondere hohe Lasten beziehungsweise hohe Pressungen die Filmbildungseigenschaften nachhaltig verbessern, was vermutlich aus dem hohen Lasttragevermögen des Molybdändisulfid resultiert. Hierdurch wir ein äußerst degressiver Verschleißverlauf erreicht. Nach dem Aufbringen des Gleitlackes werden durch einen kurzen Einlaufvorgang offenbar die Molybdändisulfidpartikel ausgerichtet und orientiert beziehungsweise der tragfähige Film bildet sich aus. Es ist dann in einem für insbesondere Baumaschinen relevanten Temperaturbereich von -40 ° C bis + 150 ° C eine geringe Reibungszahl zwischen den Komponenten erreicht, die in der Größenordnung von weniger als 0,1 liegt. Selbst unter dem Einfluß von abrasiven Arizona- oder Türkeisand steigt die Reibungszahl auf maximal 0,18 an. Im Gegensatz zu Fetten, deren Viscosität stark von der Temperatur abhängt, und damit auch die Mischreibungszahl, bleibt die Reibungszahl der erfindungsgemäßen Gleitlacke von der Temperatur nahezu unbeeinflußt, insbesondere im Winter. Es hat sich durch Versuche erwiesen, daß nur bei einer warmhärtenden Gleitlackschicht mit den vorzugsweise angegebenen Bestandteilen von Molybdändisulfid und Graphit unter Einfluß von feinem Arizona- oder Türkeisand die Filmlebensdauer nicht gesenkt wird. Offenbar werden möglicherweise abrasive Partikel in die Gleitlackschicht eingebettet, ohne das Gleitverhalten der Schicht wesentlich zu beeinflussen. Es hat sich gezeigt, daß nur die erfindungsgemäßen Bindemittel diese Einbettfähigkeit aufweisen. Je nach Beanspruchungsbedingungen können mit der erfindungsgemäßen Ausbildung Filmlebensdauern von 300.000 bis mehr als 1 Million Zyklen (1 Zyklus entspricht bei 44 Gliedern im D6-Dozer ca. 10 m Fahrweg) erreicht werden. Die typische Zyklenzahl bei einem Dozer beträgt n<2,5 x 10⁶ und bei einem Bagger n<400.000.

Zudem läuft eine entsprechend ausgestattete Gleiskette nahezu geräusch- und quietschfrei (geringe Geräuschbildung in den Kettengelenken) bei hohen und bei niedrigen Temperaturen. Insbesondere dann, wenn beide Oberflächen des Tribosystems doppelt beschichtet sind, jeweils in einer Einzelschichtdicke von ca. 7 bis 8 µm wird eine höhere Zyklenzahl der Scharnierungen erreicht.

Damit die Einlaufphase beim Einlauf des Gelenks möglichst kurz ist, der Film optimal auf den Substrat haftet und eine maximale Filmlebensdauer erzielt wird, sind vorzugsweise die Flächen, auf die der Gleitlack aufgetragen wird, mit einer Oberflächenrauheit von etwa 0,5 µm bearbeitet. Dies kann beispielsweise durch Sandstrahlen der Oberflächen erfolgen.

Das Aushärten des Gleitlackes kann kostengünstig in einen ohnehin durchzuführenden Wärmebehandlungsgang eingefügt werden. Üblicherweise werden die Bolzen bei der Herstellung unmittelbar nach dem Abschrecken zehn bis fünfzehn Minuten bei Temperaturen zwischen 200 ° C und 250 ° C in einem Induktor kurz entspannt. Auch die Buchsen werden nach dem Härten kurz entspannt. Das anschließende Kurzentspannen der Bauteile wird aus einer fertigungstechnischen Erfahrung heraus zur Senkung der Rißbildungsneigung durchgeführt.

Da der Gleitlack üblicherweise bei Temperaturen von ca.190 ° C bis 220 ° C eingebrannt werden muß, kann dieser Fertigungsschritt mit dem Kurzentspannen kombiniert werden. Allerdings müßten insbesondere die Bolzen vor dem Beschichten endbearbeitet sein.

Die alternative Ausbildung, gemäß derer Oxid- oder Hydroxid-Verbindungen des Molybdäns mit Graphit gemischt zugegeben werden, hat ebenfalls erhebliche Vorteile bezüglich der Laufzeit.

Unterstöchiometrisches MoO₃ bildet sogenannte "Crystallographic-Shear-Structures" (CS-Structuren) aus, indem in einem Krystall Punktdefekte zu planaren Defekten auskondensieren. Die planaren Defekte können als eine fehlende Ebene, beispielsweise eine fehlende (121)-Ebene im triklinen Gitter beschrieben werden, in der jede n-te Sauerstoffebene fehlt.

Die nach dem Professor A. Magnéli benannten Phasen folgen in den triklinen Kristallsystemen der Systematik (Ti,V)ₙO₂ₙ₋₁, mit 4 ≤ n ≤ 9, oder (W,Mo)ₙO₃ₙ₋₁, mit n ≥ 4, wobei sich der Defekt, je nach Kation, in den {121}- oder {132}- und {102}-Ebenen ausbildet (zum Beispiel Mo₄O₁₁ [12033-38-4] oder Mo₈O₂₃ [12058-34-3].

Schicht-Strukturen sind auch bei Hydroxiden des Molybdäns, wie dem "Deca-Molybdat" MoO_{2,5}(OH)_{0,5} mit hexagonaler Kristallstruktur nachweisbar. Weiterhin sind die kristallinen Monohydrate und Dihydrate des Molybdäns, allgemein [MoO₃ n H₂O] mit n= 1 oder 2 bekannt. In diesen Verbindungen ist ein Teil der H₂O-Moleküle mit dem Molybdän in Schichten aus [MoOO_{4/2}(OH₂)]ₙ oktahedrisch koordiniert und der andere Teil zwischen den Schichten als Hydrat.

Es hat sich gezeigt, daß auch eine Beschichtung mit Gleitlack, der solche 0xid- oder Hydroxid-Verbindungen des Molybdäns beinhaltet, zu einer erheblichen Laufzeitverlängerung führen.

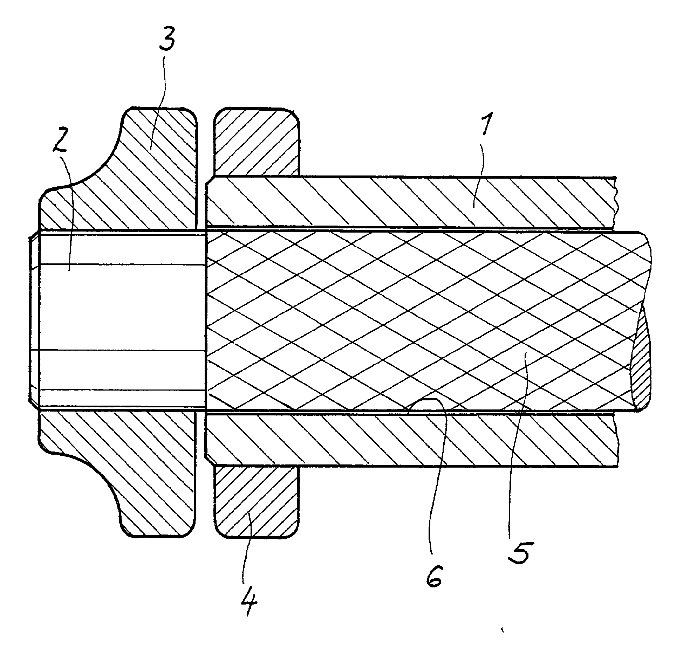

Ein Ausführungsbeispiel der Erfindung ist in der Zeichnung dargestellt und im folgenden näher beschrieben.

Es zeigt:

Die einzige Zeichnungsfigur ein Gelenk einer Gleiskette im Schnitt gesehen.

Die Gleiskette besteht im wesentlichen aus Kettenbuchsen 1, Kettenbolzen 2 sowie außenliegenden Kettengliedern 3 und innenliegenden Kettengliedern 4 im Scharnierbereich. Der innenliegende Bereich 4 ist durch Verkröpfung eines Kettengliedes gebildet, dessen anderes Ende den außenliegenden Endbereich der jeweils folgenden Gelenkstelle bildet.

Zur Bildung des Scharniergelenks sind die innenliegenden Kettengliedenden (4) auf die Kettenbuchse 1 und die außenliegenden Kettengliedenden (3) auf die die Kettenbuchse 1 axial überragenden Enden der Kettenbolzen 2 aufgepreßt. Im Preßbereich sind die Mantelflächen von Kettenbuchse und Kettenbolzen frei von Beschichtungen.

Die Mantelfläche 5 des Kettenbolzens 2 und die Innenmantelfläche 6 der Kettenbuchse 1 sind in dem Bereich, der bei der Scharnierung der Kettengelenke gegenseitig in Berührung kommt, mit Gleitlack beschichtet. Der Gleitlack weist ein Bindemittel oder einen Träger aus Kunststoff auf Polyamid/Polyimid-Basis oder aus Molekülstrukturen mit Amid/Imid-Monomeren auf, der mit Molybdändisulfid und Graphit gemischt ist, wobei vorzugsweise die Molybdändisulfid-Anteile in der Größenordnung von 15 bis 30 Volumenprozent liegen und vorzugsweise die Graphit-Anteile bei 4 bis 6 Volumenprozent liegen. Die zu beschichtenden Mantelflächen können vor dem Aufbringen des Gleitlackes aufgerauht sein, beispielsweise durch Sandstrahlen, wobei die Rauhtiefe der Aufrauhung etwa Ra ∼ 0,5 µm betragen soll. Die Schichtdicke der Gleitlackbeschichtung beträgt auf beiden Elementen vorzugsweise 14 bis 16 µm, wobei auf jedes Element Mehrfachschichten aufgebracht werden, die hinsichtlich ihrer Schichtdicke eine Dicke von ca. 7 bis 8 µm nicht überschreiten.

Durch die Erfindung wird eine äußerst kostengünstige Gleiskette zur Verfügung gestellt, die eine hohe Lebensdauer aufweist, wobei selbst bei der Einwirkung von abrasiven Fremdstoffen wie Sand eine degressiver Verschleißverlauf erreicht wird.

Die Erfindung ist nicht auf das Ausführungsbeispiel beschränkt, sondern im Rahmen der Offenbarung vielfach variabel.

## Patentansprüche

1. Gleiskette für Kettenfahrzeuge, insbesondere kettengetriebene Bau- und Sonderfahrzeuge, sowie für fördertechnische Einrichtungen, bestehend aus Kettenbuchsen (1), Kettenbolzen (2) und Kettengliedern (3,4), wobei zur Bildung eines Scharniergelenks die innenliegenden Kettengliederenden (4) auf die Kettenbuchse (1) und die außenliegenden Kettengliederenden (3) auf die die Kettenbuchse (1) axial überragenden Enden der Kettenbolzen (2) aufgepresst sind, **dadurch gekennzeichnet, dass** die Mantelfläche (5) des Kettenbolzens (2) oder die Innenmantelfläche (6) der Kettenbuchse (1) mindestens in dem Bereich, der bei der Scharnierung der Kettengelenke gegenseitig in Berührung kommt, oder beide Mantelflächen mit einem Gleitlack beschichtet ist oder sind, der aus einem Bindemittel oder Träger aus Kunststoff mit Molekülstrukturen mit Amid-Imid-Monomeren besteht, der mit Hydroxid-Verbindungen des Molybdäns oder einer Mischung von Hydroxid-Verbindungen des Molybdäns und Molybdändisulfid und Graphit gemischt ist.

2. Gleiskette nach Anspruch 1,
**dadurch gekennzeichnet, dass** das Bindemittel oder der Träger aus Molekülen mit alternierenden Amid-Imid-Monomeren besteht.

3. Gleiskette nach Anspruch 1 oder 2,
**dadurch gekennzeichnet, daß** auf die mit Gleitlack zu beschichtenden Mantelflächen (5,6) ein Primer, insbesondere in Form einer Phosphatierung aufgebracht ist, der mit Gleitlack beschichtet ist.

4. Gleiskette nach einem der Ansprüche 1 bis 3,
**dadurch gekennzeichnet, daß** die zu beschichteten Mantelflächen (5,6) aufgerauht sind und der Gleitlack auf die aufgerauhten Flächen aufgebracht ist.

5. Gleiskette nach Anspruch 4,
**dadurch gekennzeichnet, daß** die Rauhtiefe der Aufrauhung etwa Ra ∼ 0,5 µm beträgt.

6. Gleiskette nach einem der Ansprüche 1 bis 5,
**dadurch gekennzeichnet, daß** der Gleitlack Molybdändisulfid in der Größenordnung von 15 bis 30 Volumenprozent enthält.

7. Gleiskette nach einem der Ansprüche 1 bis 6,
**dadurch gekennzeichnet, daß** der Gleitlack Graphit in der Größenanordnung von 3 bis 20 Volumenprozent enthält.

8. Gleiskette nach einem der Ansprüche 1 bis 7,
**dadurch gekennzeichnet, daß** der Gleitlack 20 bis 25 Volumenprozent Molybdändisulfid und 4 bis 6 Volumenprozent Graphit enthält.

9. Gleiskette nach einem der Ansprüche 1 bis 8,
**dadurch gekennzeichnet, daß** der Gleitlack auf den Mantelflächen (5,6) eingebrannt ist.

10. Gleiskette nach Anspruch 9,
**dadurch gekennzeichnet, daß** die Einbrenntemperatur ca. 200 ° C und Einbrenndauer ca. 1 Stunde beträgt.

11. Gleiskette nach einem der Ansprüche 1 bis 10,
**dadurch gekennzeichnet, daß** die Schichtdicke der Gleitlackbeschichtung etwa 10 bis 20 µm beträgt.

12. Gleiskette nach einem der Ansprüche 1 bis 11,
**dadurch gekennzeichnet, daß** der Gleitlack in mehreren Schichten, vorzugsweise zwei Schichten, aufgebracht ist, wobei die Schichtdicke der Einzelbeschichtung 7 bis 10 µm beträgt.

13. Gleiskette nach einem der Ansprüche 1 bis 12,
**dadurch gekennzeichnet, daß** der Gleitlack als Hydroxide des Molybdän kristalline Monohydrate und/oder Dihydrate des Molybdänoxids enthält, allgemein nach der Formel MoOO₃ n H₂ O, mit n=1 oder 2 und/oder daß in diesen Verbindungen ein Teil der H₂ O-Moleküle mit dem Molybdän in Schichten aus [MoOO_{4/2}(OH₂)]ₙ oktahedrisch koordiniert sind oder Mo₃O₈xH₂O (Ilsemannite) enthält.

14. Gleiskette nach einem der einem der Ansprüche 1 bis 13,
**dadurch gekennzeichnet, dass** der Gleitlack unterstöchiometrische Oxyde des Molybdäns enthält, bei denen es sich um sogenannte Magnéli-Phasen der Formel (Mo)ₙO₃ₙ₋₁ handelt, mit n >4, wobei sich der Defekt in der {102}-oder {103}-Ebene des Krystalls jeweils ausbildet.

## Claims

1. Track for tracked vehicles, in particular track-driven construction vehicles and special vehicles, and for conveying devices, consisting of track bushings (1), track pins (2) and track elements (3, 4), wherein, in order to form a hinge joint, the ends of the inner track element (4) are pressed onto the track bushing (1) and the ends of the outer track element (3) are pressed onto the ends of the track pins (2) which protrude axially beyond the track bushing (1), **characterized in that** the outer surface (5) of the track pin (2) or the inner surface (6) of the track bushing (1), at least in the region which comes into mutual contact when the track joint is hinged, or both surfaces, is or are coated with a solid film lubricant which consists of a binder or carrier made of plastic with molecular structures comprising amide/imide monomers, which is mixed with hydroxide compounds of molybdenum or a mixture of hydroxide compounds of molybdenum and molybdenum disulphide and graphite.

2. Track according to Claim 1, **characterized in that** the binder or the carrier consists of molecules comprising alternating amide/imide monomers.

3. Track according to Claim 1 or 2, **characterized in that** a primer, in particular in the form of a phosphatization, is applied to the surfaces (5, 6) to be coated with solid film lubricant, and the primer is coated with solid film lubricant.

4. Track according to any of Claims 1 to 3, **characterized in that** the surfaces (5, 6) to be coated are roughened and the solid film lubricant is applied to the roughened surfaces.

5. Track according to Claim 4, **characterized in that** the depth of the roughness is approximately Ra ∼ 0.5 µm.

6. Track according to any of Claims 1 to 5, **characterized in that** the solid film lubricant contains molybdenum disulphide in an amount of 15 to 30 percent by volume.

7. Track according to any of Claims 1 to 6, **characterized in that** the solid film lubricant contains graphite in an amount of 3 to 20 percent by volume.

8. Track according to any of Claims 1 to 7, **characterized in that** the solid film lubricant contains 20 to 25 percent by volume of molybdenum disulphide and 4 to 6 percent by volume of graphite.

9. Track according to any of Claims 1 to 8, **characterized in that** the solid film lubricant is burned onto the surfaces (5, 6).

10. Track according to Claim 9, **characterized in that** the burning temperature is approximately 200°C and the burning time is approximately 1 hour.

11. Track according to any of Claims 1 to 10, **characterized in that** the layer thickness of the solid film lubricant coating is approximately 10 to 20 µm.

12. Track according to any of Claims 1 to 11, **characterized in that** the solid film lubricant is applied in a number of layers, preferably two layers, wherein the layer thickness of the individual coating is 7 to 10 µm.

13. Track according to any of Claims 1 to 12, **characterized in that** the solid film lubricant contains, as hydroxides of molybdenum, crystalline monohydrates and/or dihydrates of molybdenum oxide, generally according to the formula MoOO₃ n H₂ O, where n=1 or 2, and/or **in that**, in these compounds, some of the H₂ O molecules are octahedrally coordinated with the molybdenum in layers of [MoOO_{4/2}(OH₂)]ₙ, or contain Mo₃O₈xH₂O (ilsemannite).

14. Track according to any of Claims 1 to 13, **characterized in that** the solid film lubricant contains substoichiometric oxides of molybdenum, which are so-called Magnéli phases of the formula (Mo)ₙO₃ₙ₋₁, where n>4, wherein the defect in each case forms in the {102} or {103} plane of the crystal.

## Revendications

1. Chenille pour véhicules chenillés, en particulier des véhicules à usage spécial et des véhicules de construction pourvus d'un entraînement à chaîne, tout comme pour des dispositifs de mécanutention, comprenant des douilles de chaînes (1), des boulons de chaîne (2) et des articulations ou éléments de chaîne (3, 4), dans laquelle, en vue de la formation d'une articulation à charnière, les extrémités des articulations de chaîne disposées à l'intérieur (4) sont engagées par pression sur la douille de chaîne (1) et les extrémités des articulations de chaîne disposées à l'extérieur (3) sont engagées par pression sur les extrémités des douilles de chaîne (2) se projetant axialement au-delà de la douille de chaîne (1), **caractérisée en ce que** la surface de l'enveloppe (5) du boulon de chaîne (2) ou la surface intérieure (6) du boulon de chaîne (1), ou les deux surfaces de l'enveloppe, est ou sont revêtue(s) d'une laque de glissement, au moins sur la zone qui entre en contact réciproque lors de la formation des charnières des articulations de la chaîne, laquelle est constituée d'un adhésif ou agent liant ou d'un porteur en matière synthétique ayant des structures de molécules constituées de monomères amideimide, et laquelle est mélangée à des combinaisons d'hydroxydes de molybdène ou à un mélange de combinaisons d'hydroxydes de molybdène avec du bisulfure de molybdène et du graphite.

2. Chenille selon la revendication 1, **caractérisée en ce que** l'adhésif ou agent liant ou le support est constitué de molécules ayant des monomères imide-amide alternés.

3. Chenille selon la revendication 1 ou 2, **caractérisée en ce qu'**une première couche ou couche d'apprêt est appliquée sur les surfaces de l'enveloppe (5, 6) devant être revêtues, en particulier sous la forme d'un phosphatage, laquelle est revêtue d'une laque de glissement.

4. Chenille selon l'une quelconque des revendications 1 à 3, **caractérisée en ce que** les surfaces de l'enveloppe (5, 6) devant être revêtues sont grattées ou rendues rugueuses, et la laque de glissement est appliquée sur les surfaces grattées ou rendues rugueuses.

5. Chenille selon la revendication 4, **caractérisée en ce que** la profondeur de grattage de la partie rendue rugueuse est d'environ Ra ∼ 0,5 µm.

6. Chenille selon l'une quelconque des revendications 1 à 5, **caractérisée en ce que** la laque de glissement comprend du bisulfure de molybdène en quantité de l'ordre de 15 à 30 pourcents volumétriques.

7. Chenille selon l'une quelconque des revendications 1 à 6, **caractérisée en ce que** la laque de glissement comprend du graphite en quantité de l'ordre de 3 à 20 pourcents volumétriques.

8. Chenille selon l'une quelconque des revendications 1 à 7, **caractérisée en ce que** la laque de glissement comprend 20 à 25 pourcents volumétriques de sulfure de molybdène et 4 à 6 pourcents volumétriques de graphite.

9. Chenille selon l'une quelconque des revendications 1 à 8, **caractérisée en ce que** la laque de glissement est appliquée sur les surfaces de l'enveloppe (5, 6) par cuisson.

10. Chenille selon la revendication 9, **caractérisée en ce que** la température de cuisson est d'environ 200°C et la durée de cuisson est d'environ 1 heure.

11. Chenille selon l'une quelconque des revendications 1 à 10, **caractérisée en ce que** l'épaisseur de couche du revêtement de la laque de glissement est d'environ 10 à 20 µm.

12. Chenille selon l'une quelconque des revendications 1 à 11, **caractérisée en ce que** la laque de glissement est appliquée en plusieurs couches, de préférence deux couches, l'épaisseur d'une seule couche du revêtement étant de 7 à 10 µm.

13. Chenille selon l'une quelconque des revendications 1 à 12, **caractérisée en ce que** la laque de glissement, comprend en tant qu'hydroxydes de molybdène, des monohydrates et/ou dihydrates cristallins de l'oxyde de molybdène, généralement d'après la formule MoOO₃ n H₂ O, avec n=1 ou 2 et/ou que dans ces combinaisons, une partie des molécules H₂O est coordonnée de manière octaédrique avec le molybdène en couches [MoOO_{4/2}(OH₂)]ₙ ou comprend du Mo₃O₈xH₂O (Ilsemannite).

14. Chenille selon l'une quelconque des revendications 1 à 13, **caractérisée en ce que** la laque de glissement comprend des oxydes sous-stoechiométriques de molybdène, s'agissant ici de phases connues sous le nom de phases Magnéli, de formule (Mo)ₙO₃ₙ₋₁, avec n>4, le défaut se développant respectivement dans le plan {102} ou {103} du cristal.
